# EUROPÄISCHE PATENTSCHRIFT

(11) **EP 3 781 451 B1**
(45) Veröffentlichungstag und Bekanntmachung des Hinweises auf die Patenterteilung: **23.02.2022**
(21) Anmeldenummer: 18785866.7
(22) Anmeldetag: 27.09.2018
(51) Int. Cl.: B61C 15/10

(54) **GLEISKONDITIONIEREINHEIT MIT VORRICHTUNG ZUR SCHIENENTROCKNUNG**
TRACK-CONDITIONING UNIT WITH DEVICE FOR RAIL DRYING
UNITÉ DE CONDITIONNEMENT DE VOIE FERRÉE À DISPOSITIF DE SÉCHAGE DE RAILS

(30) Priorität: 17.05.2018 DE 102018207753
(43) Veröffentlichungstag der Anmeldung: 24.02.2021
(73) Patentinhaber: Siemens Mobility GmbH, 81739 München (DE)
(72) Erfinder: BÖGE, Ronny, 82140 Olching (DE); STELZLE, Wilfried, 85253 Kleinberghofen (DE)
(86) Internationale Anmeldenummer: PCT/EP2018/076348
(87) Internationale Veröffentlichungsnummer: WO 2019/219224

(56) Entgegenhaltungen:
- WO-A2-2015/044243
- US-A- 4 230 045
- US-A1- 2005 140 144
- US-A1- 2005 253 397
- US-A1- 2018 119 376

## Beschreibung

Die Erfindung betrifft eine kombinierte Gleiskonditioniereinheit. Weiterhin betrifft die Erfindung ein Schienenfahrzeug. Überdies betrifft die Erfindung ein Verfahren zum Erhöhen eines Reibwerts zwischen einer Schiene und einem Rad eines Schienenfahrzeugs mit Hilfe einer kombinierten Gleiskonditioniereinheit

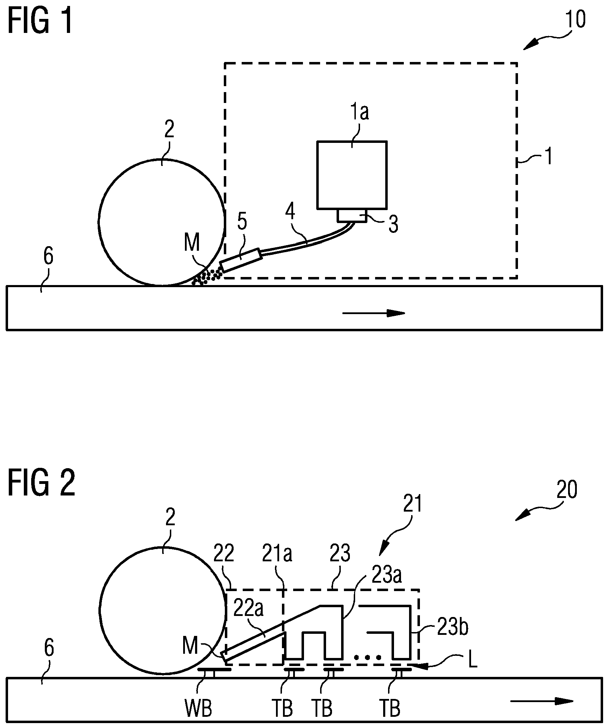

Der Kontakt zwischen dem Rad eines Schienenfahrzeugs und den befahrenen Schienen, und damit auch der Kraftschlussbeiwert, wird durch äußere Bedingungen, wie zum Beispiel Nässe, Schmutz oder ähnliches, stark beeinflusst. Um einen Kraftschlussbeiwert zwischen einem Rad eines Schienenfahrzeugs und den befahrenen Schienen zu erhöhen, wird eine Gleiskonditioniereinheit verwendet. Eine solche Gleiskonditioniereinheit ist vor dem Rad eines Schienenfahrzeugs über der Schiene angeordnet. Mit Hilfe der Gleiskonditioniereinheit wird ein Streumittel, wie zum Beispiel Bremssand oder Aluminiumoxid, auf Schienen aufgebracht, um eine verbesserte Haftreibung zu erzielen. Eine herkömmliche Gleiskonditioniereinheit (siehe FIG 1) weist eine Sandstreueinrichtung auf, welche aus einem Sandkasten, einer Sandanlage, einem Sandschlauch und einem Sandauslaufrohr besteht. Das Sandauslaufrohr wird dazu verwendet, Sand zwischen dem Rad und der Schiene gezielt aufzubringen. Dieser Sand wird in einer vorbestimmten Menge, beispielsweise 400g pro 30 Sekunden, auf die Schiene gegeben.

Allerdings kann mit Streumitteln allein Nässe auf dem Schienenkopf nicht vermieden werden. Denn z.B. Streusand bindet nur bedingt Wasser auf der Schiene, so dass durch Aufbringen von Bremssand auf nasse Schienen eine Erhöhung des Reibwertes zwischen Rad und Schiene nur eingeschränkt möglich ist. Zudem wird durch vermehrten Einsatz von Streumaterial der Radreifenverschleiß erhöht.

Aus der Druckschrift US 2018/0119376 A1 ist ein System bekannt, bei dem Druckluft auf eine Schienenstrecke aufgebracht wird.

Aus der Druckschrift US 2005/0140144 A1 ist ein System zur Besandung einer Schienenstrecke bekannt.

Es besteht also die Aufgabe, eine Vorrichtung und ein Verfahren anzugeben, mit denen ein verbesserter Kraftschlussbeiwert eines Schienenfahrzeugs bei geringerem Radreifenverschleiß erreicht wird.

Diese Aufgabe wird durch eine kombinierte Gleiskonditioniereinheit gemäß Patentanspruch 1, ein Schienenfahrzeug gemäß Patentanspruch 10 und ein Verfahren zum Erhöhen eines Reibwerts zwischen einer Schiene und einem Rad eines Schienenfahrzeugs gemäß Patentanspruch 11 beschrieben.

Die erfindungsgemäße kombinierte Gleiskonditioniereinheit weist eine kombinierte Ausbringvorrichtung mit einer im vorderen Bereich der Ausbringvorrichtung integrierten Ausströmöffnung zum Aufbringen eines gasförmigen Trocknungsmediums auf eine Schiene und einem im hinteren Bereich der Ausbringvorrichtung integrierten Streumittelauslaufeinheit zum Aufbringen eines Streumittels auf die Schiene auf. Die Ausströmöffnung ist an eine Trocknungseinheit angeschlossen, die das gasförmige Trocknungsmedium bereithält und zu der Ausströmdüse befördert. Die Streumittelauslaufeinheit kann zum Beispiel aus einem Streumittelauslaufrohr ausgebildet sein. In diesem Zusammenhang soll der "vordere Bereich" in Vorwärtsfahrtrichtung vor dem "hinteren Bereich" liegen. Durch diese Anordnung wird erreicht, dass ein zu befahrender Gleisabschnitt erst getrocknet, dann mit einem

Streumittel beaufschlagt wird und schließlich mit dem betreffenden Rad befahren wird. Ist eine erfindungsgemäße Gleiskonditioniereinheit extra zum Rückwärtsfahren in der Richtung der Vorwärtsfahrt hinter dem jeweiligen Rad angebracht, so gilt die definierte Anordnung in Richtung der Rückwärtsfahrt.

Durch die Kombination aus Trocknungseinheit und Streumittelauslaufeinheit wird bei Nässe ein höherer Haftwert zwischen Rad und Schiene erreicht als bei einer Lösung nur mit einer Streumitteleinrichtung. Durch den auf diese Weise erzielten erhöhten Haftwert kann ein Schienenfahrzeug, welches die kombinierte Gleiskonditioniereinheit aufweist, schneller beschleunigen oder alternativ höhere Lasten beschleunigen und schneller verzögern bzw. höhere Lasten verzögern.

Außerdem wird weniger Bremssand verbraucht als ohne Trocknung der Schienen, weil durch den Trocknungsvorgang der Schiene ein höherer Haftwert erzielt wird. Mithin erhöht sich auch die übertragbare Zugkraft für Schienenfahrzeuge, wodurch die Leistungsfähigkeit des Schienenfahrzeugs verbessert wird. Vorteilhaft muss kein zusätzliches Medium mitgeführt werden, da Schienenfahrzeuge üblicherweise z.B. Druckluft als gasförmiges Trocknungsmedium an Bord bereits mit sich führen. Mithin bleibt auch die Gewichtserhöhung aufgrund der zusätzlichen Funktionseinheit gering.

Das erfindungsgemäße Schienenfahrzeug weist eine Mehrzahl von Drehgestellen und eine erfindungsgemäße kombinierte Gleiskonditioniereinheit auf, welche an einem Drehgestell vor einem Rad des Drehgestells angeordnet ist. "Vor einem Rad angeordnet" soll in diesem Zusammenhang bedeuten, dass die kombinierte Gleiskonditioniereinheit in Längsrichtung, d.h. in Vorwärtsfahrtrichtung vor dem Rad angeordnet ist, damit mit den aufgebrachten Hilfsmedien die vor dem Rad liegende Schiene präpariert werden kann. Vorzugsweise weist das erfindungsgemäße Schienenfahrzeug mindestens zwei erfindungsgemäße kombinierte Gleiskonditioniereinheiten auf, um für nebeneinander auf parallelen Schienen laufende Räder denselben Kraftschlussbeiwert zu erhalten. Es können solche kombinierte Gleiskonditioniereinheiten auch vor jedem Rad angeordnet sein, um die Haftung der Räder weiter zu verbessern. Zusätzlich können auch erfindungsgemäße Gleiskonditioniereinheiten hinter einem oder mehreren Rädern angeordnet sein, um den Kraftschlussbeiwert auch beim Rückwärtsfahren zu verbessern.

Das erfindungsgemäße Schienenfahrzeug teilt die Vorteile der erfindungsgemäßen kombinierten Gleiskonditioniereinheit. Aufgrund der verbesserten Traktion lässt sich gegebenenfalls auf Lokomotiven bzw. Schienenfahrzeugen mit Mehrfachtraktion oder gar 6-achsige Loks verzichten.

Bei dem erfindungsgemäßen Verfahren zum Erhöhen eines Reibwerts zwischen einer Schiene und einem Rad eines Schienenfahrzeugs mit Hilfe einer kombinierten Gleiskonditioniereinheit wird ein gasförmiges Trocknungsmedium auf eine Schiene mit Hilfe einer im vorderen Bereich einer Ausbringvorrichtung der kombinierten Gleiskonditioniereinheit integrierten Ausströmöffnung aufgebracht. Die Ausströmöffnung kann zum Beispiel Teil einer Düse sein und ist zum Ausbringen von gasförmigen Medien ausgebildet. Mit Hilfe des gasförmigen Mediums wird die Schiene in dem Bereich vor dem Rad getrocknet. Weiterhin erfolgt ein Aufbringen eines Streumittels auf die Schiene durch eine im hinteren Bereich der Ausbringvorrichtung integrierte Streumittelauslaufeinheit, beispielsweise ein Streumittelauslaufrohr.

Das erfindungsgemäße Verfahren zum Erhöhen eines Reibwerts zwischen Schiene und Rad eines Schienenfahrzeugs mit Hilfe einer kombinierten Gleiskonditioniereinheit teilt die Vorteile der erfindungsgemäßen kombinierten Gleiskonditioniereinheit.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung auch die verschiedenen Merkmale unterschiedlicher Ausführungsbeispiele und Ansprüche auch zu neuen Ausführungsbeispielen kombiniert werden.

In einer bevorzugten Ausgestaltung der erfindungsgemäßen kombinierten Gleiskonditioniereinheit sind die Ausströmöffnung und das Streumittelauslaufrohr relativ zueinander und relativ zu der Ausbringvorrichtung fest in der Ausbringvorrichtung integriert. Vorteilhaft kann eine bei der Herstellung voreingestellte Position oder Ausrichtung von Ausströmöffnung und Streumittelauslaufrohr nicht von der einmal als geeignet ermittelten Position und Ausrichtung abweichen, so dass eine regelmäßige Korrektur oder Justage während des Betriebs nicht mehr nötig ist.

In einer Variante der erfindungsgemäßen kombinierten Gleiskonditioniereinheit sind die Ausströmöffnung und das Streumittelauslaufrohr in einer Testphase hinsichtlich ihrer Position und Ausrichtung justierbar und für den Einsatz danach, d.h. im regulären Betrieb, fixierbar angeordnet. Vorteilhaft kann in einer Testphase die günstigste Position und Ausrichtung der Ausströmöffnung und des Streumittelauslaufrohrs ermittelt werden und fixiert werden, so dass nachfolgend keine Korrekturen und Justageprozesse mehr benötigt werden, um ein korrektes Auftreffen der Hilfsmedien auf einer befahrenen Schiene zu erreichen.

In einer Ausgestaltung der erfindungsgemäßen kombinierten Gleiskonditioniereinheit weist die Ausbringvorrichtung seitlich angeordnete Ausströmöffnungen zur Trocknung der Schiene bei einer Kurvenfahrt auf. "Seitlich angebracht" soll in diesem Zusammenhang bedeuten, dass die Ausströmöffnungen bei Geradeausfahrt nicht exakt über der Mitte eines Gleises positioniert sind, sondern in Querrichtung dazu versetzt angeordnet sind. Vorteilhaft kann der Wirkbereich der Gleiskonditioniereinheit auf Teilbereiche ausgedehnt werden, die bei Kurvenfahrten abgedeckt werden müssen. Mithin wird eine verbesserte Traktion und ein verbessertes Bremsverhalten auch in Kurvenbereichen erreicht. Die seitlich angeordneten Ausströmöffnung können zum Beispiel zusätzlich zu Ausströmöffnungen, die bei Geradeausfahrt exakt über den Gleisen positioniert sind, angeordnet sein.

Bevorzugt ist die Gleiskonditioniereinheit fest am Drehgestell montiert. Dies hat den Vorteil, dass keine teuren und anfälligen Verstellmechanismen vorhanden sind, die durch erhöhte g-Stöße des Drehgestells Schaden nehmen können. Auch bei dem Auftreten von Schotterflug oder Eisbrocken, die unterflur vorhanden sind, kann durch die kompakte und fest am Drehgestell montierte Einheit deren Beschädigung oder gar Defekt vermieden werden und somit eine erhöhte Wintertauglichkeit erreicht werden.

In einer speziellen Variante der erfindungsgemäßen kombinierten Gleiskonditioniereinheit weist die Ausbringvorrichtung mindestens eine zentral angeordnete Ausströmöffnung zur Trocknung bei Geradeausfahrt auf. Zentral angeordnete Ausströmöffnungen ermöglichen eine Trocknung der Schiene bei Geradeausfahrt. Die beiden vorgenannten Ausgestaltungen können vorteilhaft auch miteinander kombiniert werden, um eine verbesserte Haftung bei unterschiedlichen Streckenführungen zu ermöglichen.

In einer Ausgestaltung der erfindungsgemäßen kombinierten Gleiskonditioniereinheit weist die Ausbringvorrichtung eine Mehrzahl von zentral angeordneten Ausströmöffnungen zur Trocknung bei Geradeausfahrt auf, welche auf einem Drehteller angeordnet sind. Ein Drehteller kann zur Justage der Ausströmöffnungen in einer Testphase genutzt werden, um den Wirkbereich der Ausströmöffnungen auf eine Schiene auszurichten.

In einer alternativen Ausgestaltung der erfindungsgemäßen kombinierten Gleiskonditioniereinheit weist die mindestens eine zentral angeordnete Ausströmöffnung einen Schieber mit einer Mehrzahl von Auslässen auf, der in Querrichtung verschiebbar ist, so dass eine Position eines Trocknungsstrahls in Querrichtung verschiebbar ist. Auf diese Weise wird ebenfalls eine Anpassung des Wirkbereichs einer Ausströmöffnung an eine Schienenposition ermöglicht.

Besonders bevorzugt ist die Ausströmöffnung zum Aufbringen eines gasförmigen Trocknungsmediums dazu eingerichtet, Druckluft als gasförmiges Trocknungsmedium auf die Schiene aufzubringen. Da Druckluft für das Bremssystem auch herkömmlich mitgeführt wird, können dafür vorgesehene Aufbewahrungseinrichtungen auch als Quelle für die Ausströmöffnung bzw. eine diese Ausströmöffnung umfassende Trocknungseinheit genutzt werden, so dass der Aufwand zum Umrüsten sowie das zusätzliche Mehrgewicht und Mehrkosten bei der erfindungsgemäßen Anordnung gering ausfallen.

In einer Ausgestaltung der erfindungsgemäßen kombinierten Gleiskonditioniereinheit ist diese für den Übergangs- und Winterbetrieb beheizt ausgeführt, damit die Ausströmöffnungen und die Streumittelauslaufeinhheit nicht einfrieren. Die Beheizung kann zum Beispiel mit Hilfe eines Heizstabs, einer Heizwendel oder einer Heizfolie erfolgen.

Weiterhin kann für eine verbesserte Energieeffizienz eine Isolation um die Ausströmöffnung und die Streumittelauslaufeinheit angebracht werden, damit bei Kälte nicht zu viel Wärme in die Umwelt abgegeben wird.

Die Erfindung wird im Folgenden unter Hinweis auf die beigefügten Figuren anhand von Ausführungsbeispielen noch einmal näher erläutert. Es zeigen:
FIG 1 eine Querschnittsansicht einer herkömmlichen Gleiskonditioniereinheit, welche vor einem Rad eines Schienenfahrzeugs angeordnet ist,
FIG 2 eine schematische Querschnittsansicht einer kombinierten Gleiskonditioniereinheit gemäß einem Ausführungsbeispiel der Erfindung,
FIG 3 eine schematische Draufsicht auf eine kombinierte Gleiskonditioniereinheit gemäß einem Ausführungsbeispiel der Erfindung,
FIG 4 ein Flussdiagramm, welches ein Verfahren zum Erhöhen eines Reibwerts zwischen einer Schiene und einem Rad eines Schienenfahrzeugs mit Hilfe einer Gleiskonditioniereinheit gemäß einem Ausführungsbeispiel der Erfindung veranschaulicht.

In FIG 1 ist eine Querschnittsansicht 10 auf eine herkömmliche Gleiskonditioniereinheit 1 veranschaulicht. Die Gleiskonditioniereinheit 1 ist in Fahrtrichtung (mit einem Pfeil symbolisiert) betrachtet, vor einem Rad 2 eines Drehgestells eines Schienenfahrzeugs (nicht gezeigt) angeordnet. Die Gleiskonditioniereinheit umfasst einen Sandkasten 1a, welcher als Reservoir für das eingesetzte Streumittel M genutzt wird. An der Außenseite des Bodenbereichs des Sandkastens 1a befindet sich eine Sandanlage 3, mit der eine Flussmenge des Streumittels reguliert wird. An die Sandanlage 3 ist ein Sandschlauch 4 angeschlossen, welcher das Streumittel M zu einem Sandauslaufrohr 5 befördert. Vor dem Sandauslaufrohr 4 wird das Streumittel auf einem Wirkbereich, d.h. auf einer Fläche eines Schienenkopfes einer Schiene 6 verteilt, auf der das Schienenfahrzeug fährt.

In FIG 2 ist eine schematische Querschnittsansicht 20 einer kombinierten Gleiskonditioniereinheit 21 gemäß einem Ausführungsbeispiel der Erfindung veranschaulicht. Die Gleiskonditioniereinheit 21 ist in Fahrtrichtung (mit einem Pfeil symbolisiert) betrachtet, vor einem Rad 2 eines Drehgestells eines Schienenfahrzeugs (nicht gezeigt) angeordnet. Die kombinierte Gleiskonditioniereinheit 21 umfasst als Teil einer Ausbringvorrichtung 21a in ihrem hinteren Bereich eine fest installierte Streumitteleinrichtung 22 mit einem Streumittelauslaufrohr 22a. Teil der kombinierten Gleiskonditioniereinheit 21 ist auch eine Vorrichtung 23 zur Trocknung der Schiene 6, auf der das Schienenfahrzeug fährt. Die Vorrichtung 23 zur Trocknung der Schiene 6 weist eine Mehrzahl von Ausströmöffnungen 23a, 23b auf, welche zur Emission eines Luftstroms L auf die Schiene 6 eingerichtet sind. Die Ausströmöffnungen zur Trocknung der Schiene 6 sind vertikal nach unten in Richtung Schiene 6 gerichtet und vor dem Streumittelauslaufrohr 22a der Streumitteleinrichtung 22 angeordnet. Das Streumittelauslaufrohr 22a ist diagonal nach unten auf die Schiene 6 gerichtet, derart, dass das ausgebrachte Streumittel M direkt vor dem Rad 2 des Schienenfahrzeugs auf die Schiene 6 in einem Wirkbereich WB aufgebracht wird. Der Luftstrom L der Ausströmöffnungen 23a, 23b ist auf einen Bereich TB vor dem Wirkbereich WB der Streumitteleinrichtung 22 gerichtet, so dass das Streumittel M auf einen bereits getrockneten Bereich der Schiene 6 fällt.

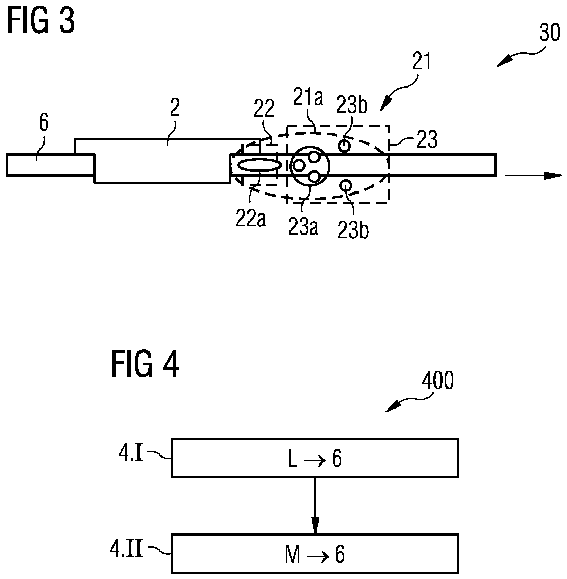

In FIG 3 ist eine Ansicht 30 von unten auf die in FIG 2 gezeigte kombinierte Gleiskonditioniereinrichtung 21 gezeigt. Die Gleiskonditioniereinrichtung 21 weist eine Ausbringvorrichtung 21a auf. Die Ausbringvorrichtung 21a weist in ihrem hinteren Abschnitt, also in dem dem Rad 2 des betreffenden Schienenfahrzeugs zugewandten Abschnitt, ein Streumittelauslaufrohr 22a auf, welches als Austragsstelle für ein Streumittel, in diesem Fall Sand, dient. In einem mittleren Abschnitt der Ausbringvorrichtung 21a ist ein Bereich mit drei Trocknungsausströmöffnungen 23a ausgebildet. Die zentrierte Anordnung der Trocknungsausströmöffnungen 23a erlaubt ein Richten eines Luftstrahls auf die befahrene Schiene 6 bei Geradeausfahrt. In diesem Fall ist entweder genau eine Ausströmöffnung 23a über der Schienenmitte positioniert oder es sind zwei Ausströmöffnungen leicht nach rechts und links oberhalb der Schienenmitte versetzt angeordnet. Weiterhin umfasst die Ausbringvorrichtung 21a auch zwei Ausströmöffnungen 23b im vorderen Bereich auf, die zur Trocknung der Schiene 6 bei einer Fahrt in einem Linksbogen oder einem Rechtsbogen positioniert sind. Diese beiden Ausströmöffnungen 23b sind jeweils seitlich versetzt, genauer gesagt, nach rechts und nach links relativ zur Mitte versetzt angeordnet. Die drei Ausströmöffnungen können gleichzeitig aber auch separat angesteuert werden, je nach Betriebsfall. Bei separater Ansteuerung wird die benötigte Menge des Trocknungsmediums verringert.

In FIG 4 ist ein Flussdiagramm 400 gezeigt, welches ein Verfahren zum Erhöhen eines Reibwerts zwischen Schiene und Rad eines Schienenfahrzeugs mit Hilfe einer Gleiskonditioniereinheit veranschaulicht. Bei dem Schritt 4.1 wird ein gasförmiges Trocknungsmedium L von einer im vorderen Bereich einer Ausbringvorrichtung der Gleiskonditioniereinheit integrierten Ausströmöffnung auf eine Schiene 6 aufgebracht. Es wird außerdem bei dem Schritt 4.2 ein Streumittel M durch ein im hinteren Bereich der Ausbringvorrichtung integriertes Streumittelauslaufrohr auf die Schiene 6 aufgebracht.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Kombinierte Gleiskonditioniereinheit (21) für ein Schienenfahrzeug, die Gleiskonditioniereinheit (21) aufweisend eine kombinierte Ausbringvorrichtung (21a)
- mit einer im vorderen Bereich (23) der Ausbringvorrichtung (21a) integrierten Ausströmöffnung (23a, 23b) zum Aufbringen eines gasförmigen Trocknungsmediums (L) auf eine Schiene (6),
- mit einer im hinteren Bereich (22) der Ausbringvorrichtung (21a) integrierten Streumittelauslaufeinheit (22a) zum Aufbringen eines Streumittels (M) auf die Schiene (6),
- wobei durch diese Anordnung erreicht wird, dass ein zu befahrender Gleisabschnitt erst getrocknet, dann mit einem Streumittel beaufschlagt und schließlich mit einem Rad des Schienenfahrzeugs bei einem erhöhten Haftwert zwischen Rad und Schiene befahren wird.

2. Kombinierte Gleiskonditioniereinheit nach Anspruch 1, wobei die Ausströmöffnung (23a, 23b) und die Streumittelauslaufeinheit (22a) fest in der Ausbringvorrichtung (21a) integriert sind.

3. Kombinierte Gleiskonditioniereinheit nach Anspruch 1, wobei die Ausströmöffnung (23a, 23b) und die Streumittelauslaufeinheit (22a) in einer Testphase hinsichtlich ihrer Position und Ausrichtung justierbar und fixierbar angeordnet sind.

4. Kombinierte Gleiskonditioniereinheit nach einem der vorstehenden Ansprüche, wobei die Ausbringvorrichtung (21a) seitlich angeordnete Ausströmöffnungen (23b) zur Trocknung der Schiene (6) bei einer Kurvenfahrt aufweist.

5. Kombinierte Gleiskonditioniereinheit nach einem der vorstehenden Ansprüche, wobei die Ausbringvorrichtung (21a) mindestens eine zentral angeordnete Ausströmöffnung (23a) zur Trocknung bei Geradeausfahrt aufweist.

6. Kombinierte Gleiskonditioniereinheit nach Anspruch 5, wobei die Ausbringvorrichtung (21a) eine Mehrzahl von zentral angeordneten Ausströmöffnungen (23a), welche auf einem Drehteller angeordnet sind, zur Trocknung bei Geradeausfahrt aufweist.

7. Kombinierte Gleiskonditioniereinheit, nach Anspruch 5, wobei die mindestens eine zentral angeordnete Ausströmöffnung (23) einen Schieber mit einer Mehrzahl von Auslässen aufweist, der in Querrichtung verschiebbar ist, so dass eine Position eines Trocknungsstrahls in Querrichtung verschiebbar ist.

8. Kombinierte Gleiskonditioniereinheit nach einem der vorstehenden Ansprüche, wobei die Ausströmöffnung (22a, 22b) zum Aufbringen eines gasförmigen Trocknungsmediums dazu eingerichtet ist, Druckluft (L) als gasförmiges Trocknungsmedium auf die Schiene (6) aufzubringen.

9. Kombinierte Gleiskonditioniereinheit nach einem der vorstehenden Ansprüche, welche beheizbar ausgebildet ist.

10. Schienenfahrzeug, aufweisend:
- eine Mehrzahl von Drehgestellen,
- eine kombinierte Gleiskonditioniereinheit (21) nach einem der vorstehenden Ansprüche, welche an einem Drehgestell vor einem Rad (2) des Drehgestells angeordnet ist.

11. Verfahren zum Erhöhen eines Reibwerts zwischen einer Schiene (6) und einem Rad (2) eines Schienenfahrzeugs mit Hilfe einer kombinierten Gleiskonditioniereinheit (21) nach einem der Ansprüche 1 bis 9, aufweisend die Schritte:
- Aufbringen eines gasförmigen Trocknungsmediums (L) auf eine Schiene (6) einer im vorderen Bereich einer Ausbringvorrichtung (21a) der kombinierten Gleiskonditioniereinheit (21) integrierten Ausströmöffnung (23a, 23b),
- Aufbringen eines Streumittels (M) auf die Schiene (6) durch eine im hinteren Bereich der Ausbringvorrichtung (21a) integrierte Streumittelauslaufeinheit (22a).

## Claims

1. Combined track conditioning unit (21) for a rail vehicle, the track conditioning unit (21) having a combined dispensing apparatus (21a)
- with an outflow opening (23a, 23b), integrated in the front region (23) of the dispensing apparatus (21a), for applying a gaseous drying medium (L) to a rail (6),
- with a gritting material outlet unit (22a), integrated in the rear region (22) of the dispensing apparatus (21a), for applying a gritting material (M) to the rail (6),
- wherein this arrangement has the effect that a portion of track to be travelled over is first dried, then has a gritting material applied to it and is finally travelled over by a wheel of the rail vehicle with an increased adhesion value between the wheel and rail.

2. Combined track conditioning unit according to Claim 1, wherein the outflow opening (23a, 23b) and the gritting material outlet unit (22a) are integrated fixedly in the dispensing apparatus (21a).

3. Combined track conditioning unit according to Claim 1, wherein the outflow opening (23a, 23b) and the gritting material outlet unit (22a) are arranged, in a test phase, so as to have a position and orientation that are adjustable and fixable.

4. Combined track conditioning unit according to one of the preceding claims, wherein the dispensing apparatus (21a) has laterally arranged outflow openings (23b) for drying the rail (6) when travelling around a bend.

5. Combined track conditioning unit according to one of the preceding claims, wherein the dispensing apparatus (21a) has at least one centrally arranged outflow opening (23a) for drying when travelling straight ahead.

6. Combined track conditioning unit according to Claim 5, wherein the dispensing apparatus (21a) has a plurality of centrally arranged outflow openings (23a), which are arranged on a rotary plate, for drying when travelling straight ahead.

7. Combined track conditioning unit according to Claim 5, wherein the at least one centrally arranged outflow opening (23) has a slider with a plurality of outlets, which is displaceable in a transverse direction such that a position of a drying jet is displaceable in a transverse direction.

8. Combined track conditioning unit according to one of the preceding claims, wherein the outflow opening (22a, 22b) for applying a gaseous drying medium is set up to apply compressed air (L) as gaseous drying medium to the rail (6) .

9. Combined track conditioning unit according to one of the preceding claims, which is configured in a heatable manner.

10. Rail vehicle having:
- a plurality of bogies,
- a combined track conditioning unit (21) according to one of the preceding claims, which is arranged on a bogie in front of a wheel (2) of the bogie.

11. Method for increasing a coefficient of friction between a rail (6) and a wheel (2) of a rail vehicle with the aid of a combined track conditioning unit (21) according to one of Claims 1 to 9, having the steps of:
- applying a gaseous drying medium (L) to a rail (6) through an outflow opening (23a, 23b) integrated in the front region of a dispensing apparatus (21a) of the combined track conditioning unit (21),
- applying a gritting material (M) to the rail (6) through a gritting material outlet unit (22a) integrated in the rear region of the dispensing apparatus (21a).

## Revendications

1. Unité combinée de conditionnement de voie ferrée (21) destinée à un véhicule ferroviaire, l'unité de conditionnement de voie ferrée (21) présentant un dispositif d'épandage combiné (21a)
- qui comprend une ouverture d'écoulement intégrée (23a, 23b) dans la zone avant (23) du dispositif d'épandage (21a), destinée à l'application d'un agent de séchage (L) sous forme gazeuse sur un rail (6) ;
- qui comprend une unité intégrée de déversement d'un moyen de dispersion (22a) dans la zone arrière (22) du dispositif d'épandage (21a), destinée à l'application d'un moyen de dispersion (M) sur le rail (6) ;
- dans laquelle, par l'intermédiaire de cet agencement, on obtient le fait qu'un tronçon de voie ferrée qui doit être emprunté, dans un premier temps sèche, est ensuite sollicité avec un moyen de dispersion, et est enfin emprunté par une roue du véhicule ferroviaire dans le cadre d'une valeur d'adhérence plus élevée entre la roue et le rail.

2. Unité combinée de conditionnement de voie ferrée selon la revendication 1, dans laquelle l'ouverture d'écoulement (23a, 23b) et l'unité de déversement d'un moyen de dispersion (22a) sont intégrées à demeure dans le dispositif d'épandage (21a).

3. Unité combinée de conditionnement de voie ferrée selon la revendication 1, dans laquelle l'ouverture d'écoulement (23a, 23b) et l'unité de déversement d'un moyen de dispersion (22a) sont disposées, dans une phase de test, de manière à pouvoir être ajustées et à pouvoir être fixées en ce qui concerne leur position et leur orientation.

4. Unité combinée de conditionnement de voie ferrée selon l'une quelconque des revendications précédentes, dans laquelle le dispositif d'épandage (21a) présente des ouvertures d'écoulement (23b) disposées en position latérale à des fins de séchage du rail (6) dans le cadre d'un trajet en courbe.

5. Unité combinée de conditionnement de voie ferrée selon l'une quelconque des revendications précédentes, dans laquelle le dispositif d'épandage (21a) présente au moins une ouverture d'écoulement (23a) disposée en position centrale à des fins de séchage dans le cadre d'un trajet rectiligne.

6. Unité combinée de conditionnement de voie ferrée selon la revendication 5, dans laquelle le dispositif d'épandage (21a) présente une pluralité d'ouvertures d'écoulement (23a), disposées en position centrale, qui sont disposées sur un plateau tournant à des fins de séchage dans le cadre d'un trajet rectiligne.

7. Unité combinée de conditionnement de voie ferrée selon la revendication 5, dans laquelle ladite au moins une ouverture d'écoulement (23) disposée en position centrale présente une pièce coulissante qui comprend une pluralité de sorties, qui est à même de se déplacer dans la direction transversale, d'une manière telle que l'on peut déplacer une position d'un jet de séchage dans la direction transversale.

8. Unité combinée de conditionnement de voie ferrée selon l'une quelconque des revendications précédentes, dans laquelle l'ouverture d'écoulement (22a, 22b) destinée à l'application d'un agent de séchage sous forme gazeuse est conçue pour appliquer de l'air comprimé (L), à titre d'agent de séchage sous forme gazeuse, sur le rail (6).

9. Unité combinée de conditionnement de voie ferrée selon l'une quelconque des revendications précédentes, qui est réalisée de manière à pouvoir être chauffée.

10. Véhicule ferroviaire qui présente :
- une pluralité de bogies ;
- une unité combinée de conditionnement de voie ferrée (21) selon l'une quelconque des revendications précédentes, qui est disposée contre un bogie à l'avant d'une roue (2) du bogie.

11. Procédé destiné à augmenter une valeur de friction entre un rail (6) et une roue (2) d'un véhicule ferroviaire à l'aide d'une unité combinée de conditionnement de voie ferrée (21) selon l'une quelconque des revendications 1 à 9, qui présente les étapes suivantes :
- l'application d'un agent de séchage (L) sous forme gazeuse sur un rail (6) d'une ouverture d'écoulement intégrée (23a, 23b) dans la zone avant d'un dispositif d'épandage (21a) de l'unité combinée de conditionnement de voie ferrée (21) ;
- l'application d'un moyen de dispersion (M) sur le rail (6) par l'intermédiaire d'une unité intégrée de déversement d'un moyen de dispersion (22a) dans la zone arrière du dispositif d'épandage (21a).
